# EUROPEAN PATENT APPLICATION

(11) **EP 2 489 893 A1**
(43) Date of publication of application: **22.08.2012**
(21) Application number: 10823287.7
(22) Date of filing: 29.09.2010
(51) Int. Cl.: F16D 3/20, F16D 1/06, F16D 3/84

(54) **POWER-TRANSMISSION SHAFT AND ASSEMBLY**

(30) Priority: 13.10.2009 JP 2009236117
(71) Applicant: NTN Corporation, Osaka-shi, Osaka 550-0003 (JP)
(72) Inventor: YAMAZAKI Kisao, Iwata-shi Shizuoka 438-0037 (JP); KOBAYASHI Masazumi, Iwata-shi Shizuoka 438-0037 (JP)
(74) Representative: Grünecker, Kinkeldey, Stockmair & Schwanhäusser
(86) International application number: PCT/JP2010/066876
(87) International publication number: WO 2011/046019

(57) **Abstract**

Provided are a power transmission shaft (shaft) which can achieve cost reduction by reducing a raw material diameter, and thus reducing a material cost and a lathing cost, and an assembly unit using the power transmission shaft. The power transmission shaft includes: a male spline (31) provided at an end portion of the power transmission shaft; an engagement large diameter portion (37) for preventing the power transmission shaft from being pushed in an axial direction of the power transmission shaft under a state in which the male spline (31) is fitted to a female spline (45) of another member; and a boot groove (33) for mounting a boot. When an outer dimension of the engagement large diameter portion (37) is denoted by D2, a maximum outer dimension of the male spline (45) is denoted by D1, and an outer dimension of a boot mount portion (32) provided with the boot groove (33) is denoted by D4, relationships D2<D1 and D2=D4 are established. An outer diameter of the engagement large diameter portion (37) and an outer diameter of the boot mount portion (32) are set to be equal to the diameter of the raw material of the power transmission shaft to maintain the diameter of the raw material of the power transmission shaft.

## Description

### Technical Field

The present invention relates to a power transmission shaft (shaft) to be used in a constant velocity universal joint and the like used in a power transmission system for automobiles and various industrial machines, and to an assembly unit.

### Background Art

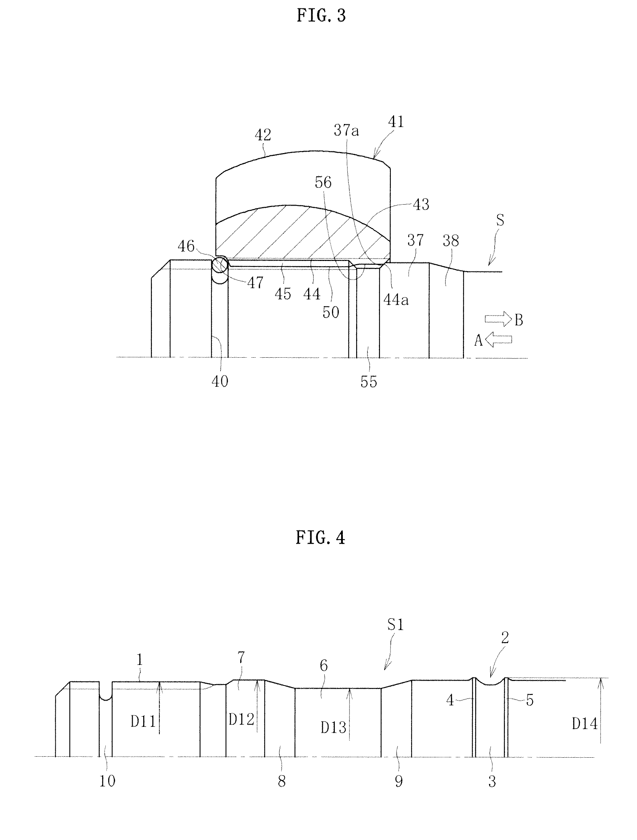

A shaft S1 to be coupled to a constant velocity universal joint generally has an end portion provided with a male spline 1 as illustrated in FIG. 4, and a boot mount portion 2 is formed at a position apart from the male spline 1 by a predetermined dimension.

The boot mount portion 2 is provided with a circumferential boot groove 3, and both opening portions of the boot groove 3 are provided with circumferential linear protrusions 4 and 5. Further, a small diameter portion 6 is provided between the boot mount portion 2 and the male spline 1. The small diameter portion 6 is provided so that the shaft S1 is prevented from interfering with an outer joint member of the constant velocity universal joint when the constant velocity universal joint forms an operating angle. An engagement large diameter portion 7, which is to be engaged with a female spline of an inner race 11 serving as an inner joint member of the constant velocity universal joint as described below, is provided between the small diameter portion 6 and the male spline 1. Note that, a tapered portion 8 is provided between the engagement large diameter portion 7 and the small diameter portion 6, and a tapered portion 9 is provided between the small diameter portion 6 and the boot mount portion 2. Further, a circumferential groove 10 is provided in an end portion (counter boot-mount-portion side) of the male spline 1.

The shaft S1 is configured such that, when a maximum outer diameter of the male spline 1 is denoted by D11, an outer dimension of the engagement large diameter portion 7 is denoted by D12, an outer dimension of the small diameter portion 6 is denoted by D13, and a maximum outer dimension of the boot mount portion 2 (outer dimensions of the circumferential linear protrusions 4 and 5) is denoted by D14, a relationship D13<D11<D12<D14 is established.

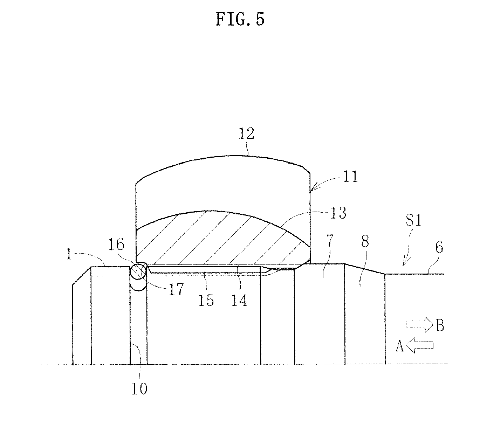

As illustrated in FIG. 5, the shaft S1 configured as described above is united, by fit-insertion, with the inner race 11 serving as the inner joint member of the constant velocity universal joint. The inner race 11 is provided with track grooves 13 circumferentially arranged at a predetermined pitch in an outer surface 12 thereof. Further, an inner surface of a hole portion 14 of the inner race 11 is provided with a female spline 15.

In this case, the end portion of the shaft S1 is fit-inserted into the hole portion 14 of the inner race 11 in an arrow A direction. With this fit-insertion, the male spline 1 of the end portion of the shaft S1 and the female spline 15 of the inner race 11 are fitted to each other. The fit-insertion of the shaft S1 is continued until the engagement large diameter portion 7 is engaged with a terminal end (one rim) of the female spline 15 of the inner race 11.

Further, the shaft S1 is fit-inserted into the hole portion 14 of the inner race 11 under a state in which a stopper ring 16 is fitted to the circumferential groove 10. During the fit-insertion, the stopper ring 16 is pressed by the female spline 15 so as to radially shrink. Under a state in which the engagement large diameter portion 7 is engaged with the terminal end of the female spline 15 of the inner race 11, the stopper ring 16 radially expands, and is engaged with a circumferential cutout portion 17 provided at an end portion of the hole portion 14 of the inner race 11 (end portion corresponding to a fit-insertion leading end portion of the shaft S1).

Thus, the stopper ring 16 prevents the shaft S1 from dropping off in an arrow B direction, and the engagement large diameter portion 7 prevents the shaft S1 from being pushed in the arrow A direction. Therefore, axial displacement of the shaft S1 is avoided.

In a case of using resin boots that are widely used in recent years because resistance to rotational expansion, durability, and the like, the boot groove 3 provided with the above-mentioned circumferential linear protrusions 4 and 5 as illustrated in FIG. 4 is used so that, for securing sealing properties, the circumferential linear protrusions 4 and 5 bite into the resin boot at the time of mounting. Meanwhile, there has been proposed a constant velocity universal joint free from the circumferential linear protrusions 4 and 5 as illustrated in FIG. 4 (Patent Literature 1). In this case, an edge portion is provided at an opening portion of the boot groove by forming the boot groove into a predetermined shape so that the edge portion bites into the boot when the boot is mounted.

In the case of forming the shaft S1, a raw material diameter of the shaft is determined by a balance with respect to a male spline diameter and a boot groove diameter. A maximum diameter portions of the conventional shaft S1 as illustrated in FIG. 4 has been outer diameters of the circumferential linear protrusions 4 and 5 or an outer diameter of the engagement large diameter portion 7.

### Citation List

### Patent Literature

Patent Literature 1: JP 3977975 B

### Summary of Invention

### Technical Problem

With regard to cost of the shaft S1, as the raw material diameter of the shaft becomes smaller, a material cost can be correspondingly saved, and hence cost reduction can be achieved. However, in the case of the conventional shaft shape as illustrated in FIG. 4, when the diameters of the circumferential linear protrusions 4 and 5 of the boot groove 3 or a diameter of the boot groove 3 can be set to be small, a diameter of a shoulder portion of the shaft (outer diameter of the engagement large diameter portion 7) becomes largest. In other words, in this case, the raw material diameter of the shaft S1 is determined by the diameters of the circumferential linear protrusions 4 and 5 of the boot groove 3 or the diameter of the engagement large diameter portion 7, and hence cannot be set to be equal to or smaller than those diameters. As a result, the raw material diameter becomes relatively larger, and hence cost reduction cannot be expected. Further, also in the case where the circumferential linear protrusions 4 and 5 are not provided, the diameter of the engagement large diameter portion 7 is used as a reference. Thus, also in this case, the raw material diameter becomes relatively larger, and hence cost reduction cannot be expected.

In view of the above-mentioned circumstances, it is an object of the present invention to provide a power transmission shaft (shaft) which can achieve cost reduction by reducing the raw material diameter, and thus reducing a material cost and a lathing cost, and to provide an assembly unit using the power transmission shaft.

### Solution to Problems

The present invention provides a power transmission shaft including: a male spline provided at an end portion of the power transmission shaft; an engagement large diameter portion for preventing the power transmission shaft from being pushed in an axial direction of the power transmission shaft under a state in which the male spline is fitted to a female spline of another member; and a boot groove for mounting a boot, in which, when an outer dimension of the engagement large diameter portion is denoted by D2, a maximum outer dimension of the male spline is denoted by D1, and an outer dimension of a boot mount portion provided with the boot groove is denoted by D4, relationships D2<D1 and D2=D4 are established, and in which an outer diameter of the engagement large diameter portion and an outer diameter of the boot mount portion are set to be equal to a diameter of a raw material of the power transmission shaft to maintain the diameter of the raw material of the power transmission shaft.

According to the power transmission shaft of the present invention, the outer diameter of the engagement large diameter portion and the outer diameter of the boot mount portion are set to be equal to the diameter of the raw material of the shaft to maintain the diameter of the raw material of the shaft. In addition, the outer diameter of the engagement large diameter portion is smaller than the outer diameter of the male spline provided at the end portion. Thus, in comparison with a conventional shaft having a male spline of the same diameter, a diameter of a maximum diameter part (engagement large diameter portion) of the raw material can be reduced. In other words, a diameter of the raw material can be set to be smaller than that of a conventional raw material, and hence lathing amounts of the boot groove and the male spline can be saved. The male spline is formed by a rolling process or a spline pressing process. An inner diameter of a linear recess of the male spline can be set to be smaller than a blank diameter before rolling or a blank diameter before pressing, and an outer diameter of a linear protrusion of the male spline can be set to be larger than the blank diameter before rolling or the blank diameter before pressing. Thus, the outer diameter of the male spline provided at the end portion can be set to be larger than the outer diameter of the engagement large diameter portion.

A material for the power transmission shaft may include a medium carbon steel. Further, male splines may be provided at both end portions of the power transmission shaft, and each of the male splines may be capable of fitting to a female spline of any one of a fixed type constant velocity universal joint and a plunging type constant velocity universal joint.

A boot material for the boot to be mounted to the boot mount portion may include a resin and a rubber. Examples of the resin include an ester-based, an olefin-based, a urethane-based, an amide-based, or a styrene-based thermoplastic elastomer. Further, examples of the rubber include a chloroprene rubber.

Further, the present invention provides an assembly unit including: the power transmission shaft; and an inner joint member of a constant velocity universal joint, the assembly unit being formed by combining the power transmission shaft and the inner joint member with each other, in which the male spline provided at the end portion of the power transmission shaft is fitted to a female spline provided in an inner surface of a hole portion of the inner joint member. In this case, it is preferred that the female spline of the inner joint member include a relief portion provided at a position corresponding to a part between the male spline and the engagement large diameter portion.

### Advantageous Effects of Invention

The power transmission shaft according to the present invention can achieve cost reduction by reducing the raw material diameter, and thus reducing a material cost and a lathing cost of the shaft. A shape of the power transmission shaft (shaft) as a whole is formed closer into a flat shape. Thus, in a case of performing thermosetting treatment, an axial variation in depth of a heat-treated hardened layer is reduced at the time of heat treatment, and hence product quality is stabilized. Further, also in terms of the material, a medium carbon steel can be used, and hence it is unnecessary to use special materials. As a result, the power transmission shaft can be stably provided at low cost. When the male spline can be fitted to the female spline of any one of the fixed type constant velocity universal joint and the plunging type constant velocity universal joint, the power transmission shaft is excellent in versatility.

The boot to be used may be made of a resin or rubber. Thus, the power transmission shaft is applicable to boots made of various materials.

The assembly unit according to the present invention uses the power transmission shaft. Thus, the material cost and the lathing cost can be saved, with the result that cost reduction can be achieved. Further, when the relief portion is provided to the inner joint member, further weight reduction can be achieved.

### Brief Description of Drawings

[FIG. 1] A side view of a power transmission shaft according to an embodiment of the present invention.
[FIG. 2] A sectional view of an assembly unit using the power transmission shaft illustrated in FIG. 1.
[FIG. 3] A sectional view illustrating a modification of the assembly unit.
[FIG. 4] A side view of a conventional power transmission shaft.
[FIG. 5] A sectional view of an assembly unit using the conventional power transmission shaft.

### Description of Embodiment

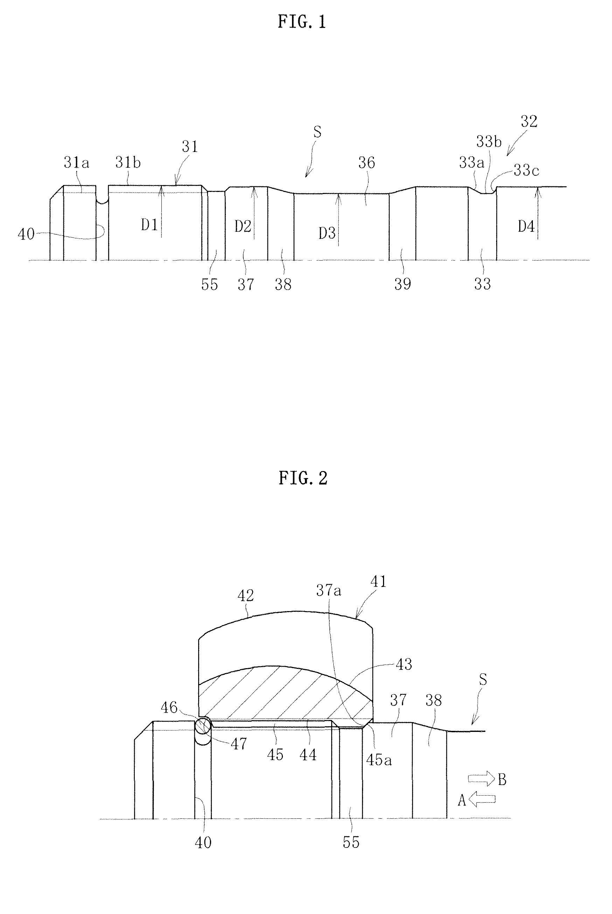

In the following, description is made of an embodiment of the present invention with reference to FIGS. 1 to 3.

FIG. 1 illustrates a power transmission shaft (shaft) according to the present invention. As illustrated in FIG. 2, the shaft S is fixed by fit-insertion to an inner race 41 serving as an inner joint member of a constant velocity universal joint, and has an end portion provided with a male spline 31. In addition, a boot mount portion 32 is formed at a position apart from the male spline 31 by a predetermined dimension. A medium carbon steel is employed as a material for the shaft S. A carbon steel is an alloy of iron and carbon. Of carbon steels, a carbon steel with a carbon content of approximately 0.3 [mass%] or less is called a low carbon steel, a carbon steel with a carbon content of approximately 0.3 [mass%] to 0.7 [mass%] is called the medium carbon steel, and a carbon steel with a carbon content of approximately 0.7 [mass%] or more is called a high carbon steel.

The boot mount portion 32 is provided with a circumferential boot groove 33. The boot groove 33 in this case is free from a conventional circumferential linear protrusion. Further, a groove bottom of the boot groove 33 is formed of a spline-side tapered portion 33a, a counter-spline-side circular arc portion 33c, and a straight portion 33b provided between the tapered portion 33a and the circular arc portion 33c. Thus, an edge portion is formed on the counter spline side of the boot groove 33. When a boot (not shown) is mounted to the boot mount portion 32, the edge portion bites into the boot, and hence a stable mounting state can be maintained.

Further, a small diameter portion 36 is provided between the boot mount portion 32 and the male spline 31. The small diameter portion 36 is provided so that the shaft S is prevented from interfering with an outer joint member of the constant velocity universal joint when the constant velocity universal joint forms an operating angle. An engagement large diameter portion 37 is provided between the small diameter portion 36 and the male spline 31. Note that, a tapered portion 38 is provided between the engagement large diameter portion 37 and the small diameter portion 36, and a tapered portion 39 is provided between the small diameter portion 36 and the boot mount portion 32. Further, a circumferential groove 40 is provided in an end portion (counter boot-mount-portion side) of the male spline 31.

In this case, when a maximum outer diameter of the male spline 31 is denoted by D1, an outer dimension of the engagement large diameter portion 37 is denoted by D2, an outer dimension of the small diameter portion 36 is denoted by D3, and a maximum outer dimension of the boot mount portion 32 is denoted by D4, relationships D2<D1 and D2=D4 are established. In other words, outer diameters of the engagement large diameter portion 37 and the boot mount portion 32 are set to be equal to a diameter of a raw material of the shaft to maintain the diameter of the raw material of the shaft. Note that, a relationship D3<D2 is established.

The male spline 31 is formed by a rolling process or a spline pressing process. An inner diameter of a linear recess 31a of the male spline 31 can be set to be smaller than a blank diameter before rolling or a blank diameter before pressing, and an outer diameter of a linear protrusion 31b of the male spline 31 can be set to be larger than the blank diameter before rolling or the blank diameter before pressing. Thus, even when the raw material diameter is smaller than the maximum outer diameter of the male spline 31, when the male spline 31 is formed, the maximum outer diameter of the male spline 31 can be set to be larger than the outer diameters of the engagement large diameter portion 37 and the boot mount portion 32.

By the way, as illustrated in FIG. 2, the inner race 41 serving as the inner joint member of the constant velocity universal joint, along which the shaft S is fit-inserted, is provided with track grooves 43 circumferentially arranged at a predetermined pitch in an outer surface 42 thereof. Further, an inner surface of a hole portion 44 of the inner race 41 is provided with a female spline 45.

In this case, the end portion of the shaft S is fit-inserted into the hole portion 44 of the inner race 41 in an arrow A direction. With this fit-insertion, the male spline 31 of the end portion of the shaft S is fitted to the female spline 45 of the inner race 41. The fit-insertion of the shaft S is continued until the engagement large diameter portion 37 is engaged with one tapered rim 45a of the female spline 45 of the inner race 41. In other words, a rim 37a on the inner-race hole portion side of the engagement large diameter portion 37 abuts against the tapered rim 45a.

Further, the shaft S is fit-inserted into the hole portion 44 of the inner race 41 under a state in which a stopper ring 46 is fitted to the circumferential groove 40. During the fit-insertion, the stopper ring 46 is pressed by the female spline 45 so as to radially shrink. Under a state in which the engagement large diameter portion 37 is engaged with the terminal end of the female spline 45 of the inner race 41, the stopper ring 46 radially expands, and is engaged with (fitted to) a circumferential cutout portion 47 provided at an end portion of the hole portion 44 of the inner race 41 (end portion corresponding to a fit-insertion leading end portion of the shaft S). In this way, an assembly unit, which is obtained by combining the power transmission shaft S and the inner race 41 of the constant velocity universal joint with each other, is formed.

Thus, the stopper ring 46 prevents the shaft S from dropping off in an arrow B direction, and the engagement large diameter portion 37 prevents the shaft S from being pushed in the arrow A direction. Therefore, axial displacement of the shaft S is avoided.

Further, an opposite end portion (not shown) of the shaft S is also provided with the male spline 31, the boot mount portion 32, and the like as illustrated in FIG. 1.

A boot material for the boot (not shown) to be mounted to the boot mount portion 32 may include a resin and rubber. Examples of the resin include an ester-based, an olefin-based, a urethane-based, an amide-based, or a styrene-based thermoplastic elastomer. Further, examples of the rubber include a chloroprene rubber.

In the present invention, the outer diameters of the engagement large diameter portion 37 and the boot mount portion 32 are set to be equal to the diameter of the raw material of the shaft to maintain the diameter of the raw material of the shaft. In addition, the outer diameter of the engagement large diameter portion 37 is smaller than the outer diameter of the male spline 31 at the end portion. Thus, in comparison with a conventional shaft having a male spline of the same diameter, a diameter of a maximum diameter part (engagement large diameter portion) of the rawmaterial can be reduced. In other words, a diameter of the raw material can be set to be smaller than that of a conventional raw material, and hence lathing amounts of the boot groove and the male spline can be saved. With this, a material cost and a lathing cost of the shaft can be saved, with the result that cost reduction can be achieved. A shape of the power transmission shaft (shaft) as a whole is formed closer into a flat shape. Thus, in a case of performing thermosetting treatment, an axial variation in depth of a heat-treated hardened layer is reduced at the time of heat treatment, and hence product quality is stabilized. Further, also in terms of the material, a medium carbon steel can be used, and hence it is unnecessary to use special materials. As a result, the power transmission shaft can be stably provided at low cost.

The male spline 31 of the shaft (power transmission shaft) S can be fitted to a female spline of any one of a fixed type constant velocity universal joint and a plunging type constant velocity universal joint. Thus, the power transmission shaft S is excellent in versatility.

The boot to be used may be made of a resin or rubber. Thus, the shaft S is applicable to boots made of various materials.

The assembly unit according to the present invention uses the power transmission shaft. Thus, a material cost and a lathing cost can be saved, with the result that cost reduction can be achieved.

Next, FIG. 3 illustrates a modification of the inner race 41. In this case, the female spline 45, specifically, a linear protrusion 50 of the female spline 45 is provided with a relief portion (cutout portion) 56 at a position corresponding to a part (small diameter portion) 55 between the male spline 31 and the large diameter portion 37. In other words, at the position corresponding to the part 55, it is unnecessary to perform spline fitting, and hence the relief portion 56 can be formed in this way.

Other structural details of the assembly unit illustrated in FIG. 3 are the same as those of the above-mentioned assembly unit illustrated in FIG. 2. Thus, the same components as those in FIG. 2 are denoted by the same reference symbols as in FIG. 2, and description thereof is omitted. Therefore, the assembly unit illustrated in FIG. 3 also has the same functions and advantages as those of the assembly unit illustrated in FIG. 2. More advantageously, the relief portion 56 is provided to the inner race 41, and hence further weight reduction can be achieved.

Hereinabove, description is made of the embodiment of the present invention, but the present invention is not limited to the above-mentioned embodiment, and various modifications may be made thereto. For example, any one of the fixed type constant velocity universal joint and the plunging type constant velocity universal joint may be employed as the constant velocity universal joint. The fixed type constant velocity universal joint may include various ones of a Rzeppa type and an undercut free type, and the plunging type constant velocity universal joint may include various ones of a double offset type, a tripod type, and a cross groove type. Further, the power transmission shaft (shaft) may be solid or hollow.

In the above-mentioned embodiment, the medium carbon steel is employed as the material for the power transmission shaft (shaft), but the power transmission shaft (shaft) may be made of a low carbon steel or a high carbon steel. That is, such a shaft is generally made of a steel, but the shaft may be a made of a composite material such as an alloy and carbon. Further, it is preferred to perform thermosetting treatment on the surface of the shaft. As thermosetting treatment, there may be employed various heat treatments such as induction hardening and carburizing-and-quenching. Here, the induction hardening refers to a quenching method in which a part required to be quenched is inserted into a coil carrying a high-frequency current, and which applies a principle that, with an electromagnetic induction action, Joule heat is generated to heat a conductive body. The carburizing-and-quenching refers to a method of causing carbon to intrude/spread from a surface of a low carbon material and then performing quenching of the material.

### Industrial Applicability

Thepowertransmissionshaft (shaft) isused, for example, for a constant velocity universal joint to be used in a power transmission system for automobiles and various industrial machines. The power transmission shaft may be used as an assembly unit formed by being combined with a constant velocity universal joint.

### Reference Signs List

- 31: male spline
- 32: boot mount portion
- 33: boot groove
- 37: engagement large diameter portion
- 45: female spline
- 55: part
- 56: relief portion

## Claims

1. A power transmission shaft, comprising:
a male spline provided at an end portion of the power transmission shaft;
an engagement large diameter portion for preventing the power transmission shaft from being pushed in an axial direction of the power transmission shaft under a state in which the male spline is fitted to a female spline of another member; and
a boot groove for mounting a boot,
wherein, when an outer dimension of the engagement large diameter portion is denoted by D2, a maximum outer dimension of the male spline is denoted by D1, and an outer dimension of a boot mount portion provided with the boot groove is denoted by D4, relationships D2<D1 and D2=D4 are established, and
wherein an outer diameter of the engagement large diameter portion and an outer diameter of the boot mount portion are set to be equal to a diameter of a raw material of the power transmission shaft to maintain the diameter of the raw material of the power transmission shaft.

2. A power transmission shaft according to claim 1, wherein a material for the power transmission shaft comprises a medium carbon steel.

3. A power transmission shaft according to claim 1 or 2, wherein the male spline is finished by a rolling process or a pressing process.

4. A power transmission shaft according to any one of claims 1 to 3, wherein the male spline comprises male splines provided at both end portions of the power transmission shaft, each of the male splines being capable of fitting to a female spline of any one of a fixed type constant velocity universal joint and a plunging type constant velocity universal joint.

5. A power transmission shaft according to any one of claims 1 to 4, wherein a boot material for the boot to be mounted to the boot mount portion comprises a resin.

6. A power transmission shaft according to any one of claims 1 to 4, wherein a boot material for the boot to be mounted to the boot mount portion comprises rubber.

7. An assembly unit, comprising:
the power transmission shaft according to any one of claims 1 to 6; and
an inner joint member of a constant velocity universal joint, the assembly unit being formed by combining the power transmission shaft and the inner joint member with each other,
wherein the male spline provided at the end portion of the power transmission shaft is fitted to a female spline provided in an inner surface of a hole portion of the inner joint member.

8. An assembly unit according to claim 7, wherein the female spline of the inner joint member comprises a relief portion provided at a position corresponding to a part between the male spline and the engagement large diameter portion.
